Europäisches Patentamt

European Patent Office

Office européen des brevets

(19)

(11) Veröffentlichungsnummer: 0 155 606
B1

(12) EUROPÄISCHE PATENTSCHRIFT

(45) Veröffentlichungstag der Patentschrifft: 28.02.90

(21) Anmeldenummer: 85102682.3

(22) Anmeldetag: 08.03.85

(51) Int. Cl. ⁵: C 08 L 29/04

(54) Thermoplastisch verarbeitbare polyvinylalkohol-Kompositionnen, Verfahren zu ihrer Herstellung und daraus hergestellte Folien und Formteile.

(30) Priorität: 21.03.84 DE 3410241

(43) Veröffentlichungstag der Anmeldung: 25.09.85 Patentblatt 85/39

(45) Bekanntmachung des Hinweises auf die Patenterteilung: 28.02.90 Patentblatt 90/09

(84) Bennante Vertragsstaaten: AT BE CH DE FR GB IT LI LU NL SE

(56) Entgegenhaltungen:
EP-A-0 148 170
FR-A-1 228 668

(73) Patentinhaber: SCHERING AKTIENGESELLSCHAFT Berlin und Bergkamen
Müllerstrasse 170/178 Postfach 65 03 11
D-1000 Berlin 65 (DE)
Patentinhaber: HOECHST AKTIENGESELLSCHAFT
Postfach 80 03 20
D-6230 Frankfurt am Main 80 (DE)

(72) Erfinder: Müller, Albrecht, Dr.
Harztorwall 4
D-3340 Wolfenbüttel (DE)
Erfinder: Zimmermann, Wolfgang, Dr.
Im Stückes 48
D-6233 Kelkheim (Taunus) (DE)

(74) Vertreter: Beck, Bernhard
HOECHST AKTIENGESELLSCHAFT Zentrale
Patentabteilung Postfach 80 03 20
D-6230 Frankfurt/Main 80 (DE)

EP 0 155 606 B1

## Beschreibung

Gegenstand der Erfindung sind thermoplastisch verarbeitbare Kompositionen aus Polyvinylalkohol, einem Weichmacher, Wasser und einem Inhibitor, ein Verfahren zur Herstellung dieser Kompositionen und aus diesen Kompositionen hergestellte Folien und Formteile, insbesondere Blasfolien, die auch nach längerer Lagerung bei hoher Temperatur und unter der Einwirkung einer aggressiven Atmosphäre kaltwasserlöslich bleiben.

Kaltwasserlösliche Folien aus Polyvinylalkohol werden als Verpackung für aggressive und giftige Substanzen verwendet, die in Wasser gelöst oder dispergiert zur Anwendung kommen. Durch die Verpackung in der kaltwasserlöslichen Folie wird die Handhabung solcher Substanzen, beispielsweise von Pflanzenschutzmitteln oder Reinigern, erleichtert und sicherer gemacht, weil bei der Herstellung von Lösungen oder Dispersionen der unmittelbare Kontakt mit den Substanzen vermieden wird. Als kaltwasserlöslich gelten Polyvinylalkohole, die in Wasser von höchstens 40°C löslich sind.

Ein Nachteil der bisher bekannten Verpackungsfolien aus Polyvinylalkohol besteht darin, daß sie unter der Einwirkung aggressiver Medien, insbesondere von Chlorwasserstoff, von Bleichmitteln wie Natriumchlorit oder Reinigern, die Amidosulfonsäure enthalten, bei längerer Lagerung insbesondere bei hohen Temperaturen so verändert werden, daß sie in kaltem Wasser nicht mehr löslich sind. Die Lagerfähigkeit solcher Packungen ist daher beschränkt.

Versuche, thermoplastisch verarbeitbare Polyvinylalkohol-Kompositionen durch Zusatz von Aminen zu stabilisieren schlugen fehl, da solche Kompositionen bereits bei der thermoplastischen Verarbeitung unter starker Vergilbung so verändert werden, daß die Kaltwasserlöslichkeit verloren geht.

Ein Zusatz von Polyacrylamid führt dazu, daß die Schmelzviskosität der Polyvinylalkohol-Kompositionen so stark ansteigt, daß eine thermoplastische Verarbeitung, insbesondere zu Blasfolien, nicht mehr möglich ist.

Es wurde nun gefunden, daß thermoplastisch verarbeitbare Polyvinylalkohol-Kompositionen die geschilderten Nachteile nicht haben, wenn sie auf 100 Gew.-Teile Polyvinylalkohol 0,5 bis 10 Gew.-Teile, vorzugsweise 1 bis 4 Gew.-Teile, eines wasserlöslichen Polymeren oder Copolymeren enthalten, das zu mindestens 70 Gew.-% aus Monomereinheiten besteht, die am Amidostickstoff mindestens einfach substituierte Carbonsäureamide sind.

Beispiele für den erfindungsgemäßen Zusatz sind Homo- oder Copolymere von N-Vinylpyrrolidon, 2-Acrylamido-2-methyl-propansulfonsäure in Form des Alkali- oder Ammoniumsalzes und N-Vinyl-N-methyl-acetamid.

Geeignete Polyvinylalkohol-Qualitäten sind grundsätzlich alle Typen die in kaltem Wasser löslich sind. Um sie thermoplastisch verarbeitbar zu machen, setzt man ihnen an sich bekannte Weichmacher zu. Die erfindungsgemäss verwendeten Weichmacher sind mehrfunktionelle aliphatische Alkohole mit einem Siedepunkt von mehr als 250°C in Kombination mit Wasser. Beispiele solcher Alkohole sind Trimethylolpropan, Diglycol (2,2'-Dihydroxy-diethylether) und Glycerin. Die Menge richtet sich nach dem Polymerisationsgrad und dem Restacetylgehalt des Polyvinylalkohols. Sie ist um so höher, je niedriger der Restacetylgehalt und der Polymerisationsgrad des Polyvinylalkohols ist. In der Regel ist ein Zusatz von 2 bis 15 Gew.-Teilen des mehrfunktionellen Alkohols auf 100 Gew.-Teile Polyvinylalkohol ausreichend.

Der erforderliche Zusatz an Wasser beträgt in der Regel 1 bis 5 Gew.-Teile auf 100 Gew.-Teile Polyvinylalkohol.

Höhere Zusatzmengen an mehrfunktionellen aliphatischen Alkoholen bis zu 50 Gew.-Teile auf 100 Gew.-Teile Polyvinylalkohol sind möglich.

Zur Herstellung eines erfindungsgemäß modifizierten und gut handhabbaren Granulats für die thermoplastische Verarbeitung verfährt man zweckmäßig so, daß man zunächst den Polyvinylalkohol, dessen Korngröße zweckmäßig zu mindestens 70 % im Bereich von 0,4 bis 4,0 mm liegen soll, mit dem carbonsäureamidhaltigen Polymeren, das vorzugsweise pulverförmig ist, und dessen Partikelgröße nicht mehr als 300 μm sein soll, vermischt und darauf das Wasser und den Alkohol zusetzt und unter Temperaturerhöhung auf etwa 60 bis 120°C, vorzugsweise 60 bis 80°C solange intensiv durchmischt, bis die Mischung nach Durchlaufen einer Gelierphase wieder körnig wird.

Die folgenden Beispiele zeigen Ausführungsformen der Erfindung.

## Beispiel 1

In einem Zwangsmischer werden vorgelegt:

6,0 kg eines granulatförmigen Polyvinylalkohols mit folgenden Kenndaten: Viskosität der 4-%-igen wäßrigen Lösung 15 mPa·s (gemessen bei 20°C), Esterzahl 223 mgKOH/g, Korngrößenverteilung: 70 % im Bereich eines Durchmessers von 0,4 bis 4 mm,

60 g Polyvinylpyrrolidon-Pulver mit folgenden Kenndaten: Molekulargewicht ca. 700 000, K-Wert: 90 (vgl. Handbuch von Wiborn "Physikalische und technologische Prüfungsverfahren für Lacke und ihre Rohstoffe", Auflage 1953),

15 g Stearinsäure.

Zu dieser Feststoff-Mischung werden im Laufe von 1 Minute hinzugegeben eine Lösung von

192 g Trimethylolpropan, gelöst in
120 g Wasser. Dabei wird mit der höchsten Tourenzahl des Rührers von 1 200 min$^{-1}$ gerührt.

Innerhalb von 15 min steigt die Temperatur der Mischung auf 70°C; danach wird die Rührerumdrehungszahl auf 600 min$^{-1}$ reduziert und die Mischerwand mit Kaltwasser gekühlt.

Der Mischung werden dann bei einer Innentemperatur von 65°C 36 g einer feinteiligen silikonisierten Kieselsäure hinzugefügt. Bei 60°C wird der Ansatz aus dem Kessel abgelassen.

Es resultiert eine gut rieselfähige Polyvinylalkohol-Komposition als nichtstaubendes und nichtklebendes Granulat.

**Beispiel 1a) (Anwendungsbeispiel)**

Die nach Beispiel 1 erhaltene Polyvinylalkohol-Komposition wurde mit Hilfe eines handelsüblichen Einschneckenextruders einer Länge von 25 D bei einer Schneckenumdrehungszahl von 50 min$^{-1}$ in einem Temperaturbereich zwischen 200 bis 170°C (Blaskopf), einem Massedruck am Blaskopf von 250 bar, einem Durchsatz von 75 g · min$^{-1}$ und einer Abzugsgeschwindigkeit von 6 m · min$^{-1}$ zu einer Blasfolie verarbeitet, bei der das Aufblasverhältnis zwischen Blaskopfdurchmesser und Schlauchblase 1 : 7 betrug. Es resultierte eine durchsichtige, nichtblockende, sehr schnell in Wasser von 15°C sich lösende Extrusionsblasfolie mit einer Dicke von 30 µm.

Auf einer Folienverschweißapparatur wurden Beutel aus der Polyvinylalkohol-Folie geschweißt, welche mit je 10 g einer trockenen Mischung einer feinteiligen Kieselsäure mit 1 % konzentrierter Salzsäure gefüllt und zugeschweißt wurden. Zur Vermeidung von Luftzutritt und Luftfeuchte wurden diese Beutel in Polyethylen und Aluminiumfolie luftdicht verpackt und 4 Wochen bei einer Temperatur von 50°C im Trockenschrank gelagert.

Nach dieser Lagerzeit wurden mit den Folienbeuteln Lösegeschwindigkeiten in Wasser von 15°C durchgeführt. Hierbei zeigte sich zwischen einem Blindversuch (entsprechender Beutel, gefüllt mit Sorbit, entsprechend gelagert) und dem Beutel, gefüllt mit dem chlorwasserstoffhaltigen Material, kein Unterschied. Beide Beutel waren in 5 min unter Rühren vollständig aufgelöst.

**Beispiel 2**

In der oben beschriebenen Mischapparatur werden vorgelegt:

6 kg eines granulatförmigen Polyvinylalkohols mit folgenden Kenndaten:

Viskosität der 4-%-igen wäßrigen Lösung 8 mPa · s (gemessen bei 20°C), Esterzahl 140 mg KOH/g, Korngrößenverteilung: 70 % im Bereich eines Durchmessers von 0,4 bis 4,0 mm.

60 g   eines pulverförmigen Copolymerisates des Ammoniumsalzes der 2-Acrylamido-2-methylpropansulfonsäure mit einer Viskosität, 1-%-ig in Wasser gemessen, von 18 mPa · s,

150 g   eines Polyvinylacetatpulvers (durchschnittlicher Polymerisationsgrad: 1 500; Partikeldurchmesser 20 bis 200 µm),

15 g   Stearinsäure.

Zu dieser Feststoffmischung werden im Laufe von 1 min hinzugegeben eine Lösung von

480 g   Diglykol,

240 g   Glycerin in

240 g   Wasser.

Dabei wird mit der höchsten Tourenzahl des Rührers mit 1 200 min$^{-1}$ gerührt. Innerhalb von 15 min steigt die Temperatur der Mischung auf 60°C; danach wird die Rührerumdrehungszahl auf 600 min$^{-1}$ reduziert und die Mischerwand mit Kaltwasser gekühlt.

Der Mischung werden dann bei einer Innentemperatur von 55°C 36 g einer feinteiligen silikonisierten Kieselsäure zugefügt. Danach wird der Ansatz aus dem Kessel abgelassen. Es resultiert eine gut rieselfähige, nichtstaubende und nichtklebende granulatförmige Polyvinylalkohol-Komposition. Die Mischerwandungen weisen keinen Belag auf.

**Beispiel 2a) (Anwendungsbeispiel)**

Gemäß Beispiel 1a) wird die in Beispiel 2 erhaltene Polyvinylalkohol-Komposition im Einschnekkenextruder zu einer einwandfreien, fischaugenfreien und nichtblockenden Blasfolie von 30 µm verarbeitet.

Analog zu Beispiel 1a) werden auch mit dieser Folie Beutel geschweißt und mit je 10 g der Chlorwasserstoff enthaltenden feinteiligen Kieselsäure gefüllt, sowie zur Vermeidung von Luftzutritt und Luftfeuchte in Polyethylen- und Aluminiumfolie luftdicht verpackt. Vergleichsweise wurden entsprechend Beispiel 1 Beutel mit dem chemisch inerten Sorbit gefüllt. Nach 4-wöchiger Lagerung der Beutel bei 50°C im Trockenschrank erfolgten dann die Lösegeschwindigkeitsversuche der Beutel in Wasser von 15°C. Sowohl die mit Sorbit gefüllten Beutel als auch diejenigen mit der chlorwasserstoffhaltigen feinteiligen Kieselsäure lösten sich innerhalb von 5 min unter Rühren rückstandslos auf.

**Beispiel 3**

Im oben beschriebenen Zwangsmischer werden vorgelegt:

6 kg   granulatförmiger Polyvinylalkohol mit den im Beispiel 1 beschriebenen Kenndaten,

150 g   eines pulverförmigen Copolymerisats des N-Vinyl-N-methylacetamids

15 g   Stearinsäure.

Zu dieser Mischung werden unter Rühren bei 1 200 min$^{-1}$ hinzugegeben eine Lösung von

192 g    Trimethylolpropan in
120 g    Wasser.

Innerhalb von 10 min steigt die Temperatur der Mischung durch Friktionswärme auf 65°C; danach wird die Rührerumdrehungszahl auf 600 min⁻¹ reduziert und die Mischerwand mit Kaltwasser gekühlt.

Der Mischung werden dann bei einer Temperatur von 60°C 36 g einer feinteiligen silikonisierten Kieselsäure hinzugefügt.

Bei 55°C wird der Ansatz aus dem Kessel abgelassen. Es resultierte eine gut rieselfähige, nichtstaubende und nichtblockende granulatförmige Polyvinylalkohol-Komposition.

## Beispiel 3a) (Anwendungsbeispiel)

Die nach Beispiel 3 erhaltene Komposition wird wie in Beispiel 1a) und 2a) zur Blasextrusionsfolie verarbeitet. Hierbei entsteht eine nichtblockende, klare Polyvinylalkoholfolie von 30 µm.

Nach Durchführung des in Beispiel 1a) und 2a) beschriebenen Lagertestes der Folie, einmal mit chlorwasserstoffhaltiger feinteiliger Kieselsäure, zum anderen mit inertem Sorbit stellte sich folgendes heraus: die mit Sorbit gefüllten Beutel lösten sich in Wasser von 15°C innerhalb von 5 min vollständig auf. Die mit chlorwasserstoffhaltiger feiner Kieselsäure gefüllten Beutel zeigten nach dieser Zeit einen Löserückstand von 10 Gew.-%.

## Beispiel 4

Im oben beschriebenen Zwangsmischer werden vorgelegt:

    6 kg    eines granulatförmigen Polyvinylalkohols mit den Kenndaten von Beispiel 1
    150 g   eines pulverförmigen, copolymeren Ammoniumsalzes der 2-Acrylamido-2-methylpropansulfonsäure,
    15 g    Stearinsäure.

Bei einer Rührerumdrehungszahl von 1 200 min wird diese Vorlage innerhalb von 1 min vermischt mit einer Lösung von 195 g Trimethylolpropan, gelöst in 125 g Wasser.

Durch Friktionswärme steigt die Temperatur der Mischung innerhalb von 15 min auf 70°C an; danach wird die Rührerumdrehungszahl auf 60 min⁻¹ reduziert und die Mischerwand mit Kaltwasser gekühlt.

Die Mischung wird dann bei einer Temperatur von 65°C mit 36 g einer feinteiligen, silikonisierten Kieselsäure versetzt.

Bei 60°C wird der Ansatz aus dem Kessel abgelassen. Es resultierte eine gut rieselfähige, nichtstaubende und nichtklebende, granulatförmige Polyvinylalkohol-Komposition.

## Beispiel 4a) (Anwendungsbeispiel)

Wie in den vorhergehenden Beispielen beschrieben, wird auch der vorstehend hergestellte Blend verarbeitet zu einer Blasextrusionsfolie von 30 µm.

In den Lagertests wurden außer Sorbit als inertes pulverförmiges Material noch folgende pulverförmigen Substanzen in Beutel eingeschweißt und entsprechend gelagert: das mit 1 % konz. Salzsäure beaufschlagte feinteilige Kieselsäurepulver, Amidosulfonsäure, Natriumchlorit.

Nach der Lagerzeit von 4 Wochen bei 50°C stellten sich folgende Löseergebnisse der Folie in Wasser von 15°C innerhalb von 5 min heraus: die mit Chlorwasserstoff versetzte feinteilige Kieselsäure: vollständig

Amidosulfonsäure: vollständig

Natriumchlorit: Rückstand von 8 % der Folie.

**Patenansprüche** für die Vertragsstaaten: BE, CH, DE, FR, GB, IT , LI, LU, NL, SE

1. Auf thermoplastischem Weg zu kaltwasserlöslichen Folien und Formteilen verarbeitbare Polyvinylalkohol-Kompositionen, bestehend aus

(a) kaltwasserlöslichem Polyvinylalkohol,
(b) Wasser und einem mehrfunktionellen aliphatischen Alkohol mit einem Siedepunkt von mehr als 250°C als Weichmacher und
(c) 0,5 bis 10 Gew.-Teilen auf 100 Gew.-Teile Polyvinylalkohol eines pulverförmigen, wasserlöslichen Polymeren oder Copolymeren, dessen Partikelgröße nicht mehr als 300 µm beträgt und das zu mindestens 70 Gew.-% aus Monomereinheiten besteht, die am Amidostickstoff mindestens einfach substituierte Carbonsäureamide sind.

2. Kompositionen nach Anspruch 1, dadurch gekennzeichnet, daß der Gehalt an Komponente (c) 1 bis 4 Gew.-Teile auf 100 Gew.-Teile Polyvinylalkohol beträgt.

3. Kompositionen nach Anspruch 1 und/oder 2, dadurch gekennzeichnet, daß die Komponente (c) ein Polymeres oder Copolymeres von N-Vinylpyrrolidon, dem Natrium- oder Ammoniumsalz der 2-Acrylamido-2-methyl-propansulfonsäure oder N-Vinyl-N-methyl-acetamid ist.

4. Verfahren zum Herstellen von Polyvinylalkohol-Kompositionen nach einem oder mehreren der Ansprüche 1 bis 3, dadurch gekennzeichnet, daß man einen kaltwasserlöslichen Polyvinylalkohol mit einer Korngröße von im Mittel mindestens 70 Gew.-% zwischen 0,4 und 4,0 mm mit dem wasserlöslichen Polymeren oder Copolymeren (c) trocken mischt, darauf das Wasser und den Alkohol (b) zusetzt und unter Erwärmen der Mischung auf 60 bis 120°C, vorzugsweise 60 bis 80°C, solange intensiv durchmischt, bis das Gemisch nach Durchlaufen einer Gelierphase wieder körnig wird.

5. Verwendung von Polyvinylalkohol-Kompositionen nach einem oder mehreren der Ansprüche 1 bis 3 bzw. hergestellt nach Anspruch 4, zum Herstellen von Folien durch thermoplastische Verformung.

6. Durch thermoplastische Verformung erhaltene, kaltwasserlösliche Folie aus weichmacherhaltigen Polyvinylalkohol-Kompositionen nach einem oder mehreren der Ansprüche 1 bis 3 bzw. hergestellt nach Anspruch 4, gekennzeichnet durch einen Gehalt von 0,5 bis 10 Gew.-Teilen, vorzugsweise 1 bis 4 Gew.-Teilen, auf 100 Gew.-Teile Polyvinylalkohol eines wasserlöslichen Polymeren oder Copolymeren, das zu mindestens 70 Gew.-% aus Monomereinheiten besteht, die am Amidostickstoff mindestens einfach substituierte Carbonsäureamide sind.

7. Folie nach Anspruch 5 und/oder 6, dadurch gekennzeichnet, daß sie auf 100 Gew.-Teile Polyvinylalkohol 0,5 bis 10, vorzugsweise 1 bis 4, Gew.-Teile eines wasserlößlichen Polymeren oder Copolymeren enthält, das zu mindestens 70 Gew.-% aus Monomereinheiten aus N-Vinylpyrrolidon, dem Natrium- oder Ammoniumsalz der 2-Acrylamido-2-methylpropansulfonsäure oder N-Vinyl-N-methyl-acetamid besteht.

**Patentansprüche für den Vertragsstaat: AT**

1. Verfahren zum Herstellen von auf thermoplastischem Weg zu kaltwasserlöslichen Folien und Formteilen verarbeitbaren Polyvinylalkohol-Kompositionen, dadurch gekennzeichnet, daß diese aus

(a) kaltwasserlöslichem Polyvinylalkohol,
(b) Wasser und einem mehrfunktionellen aliphatischen Alkohol mit einem Siedepunkt von mehr als 250° C als Weichmacher und
(c) 0,5 bis 10 Gew.-Teilen auf 100 Gew.-Teile Polyvinylalkohol eines pulverförmigen, wasserlöslichen Polymeren oder Copolymeren, dessen Partikelgrößen nicht mehr als 300 μm betragen und das zu mindestens 70 Gew.-% aus Monomereinheiten besteht, die am Amidostickstoff mindestens einfach substituierte Carbonsäureamide sind,

bestehen und erhalten werden, indem man einen kaltwasserlöslichen Polyvinylalkohol mit einer Korngröße von im Mittel mindestens 70 Gew.-% zwischen 0,4 und 4,0 mm mit dem wasserlöslichen Polymeren oder Copolymeren (c) trocken mischt, darauf das Wasser und den Alkohol (b) zusetzt und unter Erwärmen der Mischung auf 60 bis 120° C, vorzugsweise 60 bis 80° C, solange intensiv durchmischt, bis das Gemisch nach Durchlaufen einer Gelierphase wieder körnig wird.

2. Verfahren nach Anspruch 1, dadurch gekennzeichnet, daß der Gehalt an Komponente (c) 1 bis 4 Gew.-Teile auf 100 Gew.-Teile Polyvinylalkohol beträgt.

3. Verfahren nach Anspruch 1 und/oder 2, dadurch gekennzeichnet, daß die Komponente (c) ein Polymeres oder Copolymeres von N-Vinylpyrrolidon, dem Natrium- oder Ammoniumsalz der 2-Acrylamido-2-methyl-propansulfonsäure oder N-Vinyl-N-methyl-acetamid ist.

4. Verwendung von Polyvinylalkohol-Kompositionen, hergestellt nach einem oder mehreren der Ansprüche 1 bis 3, zum Herstellen von Folien durch thermoplastische Verformung.

5. Verfahren zum Herstellen von kaltwasserlöslichen Folien aus Polyvinylalkohol durch thermoplastische Verformung von weichmacherhaltigen Polyvinylalkoholkompositionen, dadurch gekennzeichnet, daß man Polyvinylalkoholkompositionen, hergestellt nach einem oder mehreren der Ansprüche 1 bis 3, thermoplastisch verformt.

6. Verfahren nach Anspruch 5, dadurch gekennzeichnet , daß die weichmacherhaltige Polyvinylalkoholkomposition auf 100 Gew.-Teile Polyvinylalkohol 0,5 bis 10, vorzugsweise 1 bis 4, Gew.-Teile eines wasserlöslichen Polymeren oder Copolymeren enthält, das zu mindestens 70 Gew.-% aus Monomereinheiten aus N-Vinylpyrrolidon, dem Natrium- oder Ammoniumsalz der 2-Acrylamido-2-methylpropansulfonsäure oder N-Vinyl-N-methyl-acetamid besteht.

**Claims** for the Contracting States: BE, CH, DE, FR, GB, IT, LI, LU, NL, SE

1. A polyvinyl alcohol composition which can be processed by thermoplastic means into films and mouldings soluble in cold water, and which comprises

(a) polyvinyl alcohol soluble in cold water,
(b) water and a polyhydric aliphatic alcohol having a boiling point above 250°C as a plasticizer and
(c) 0.5 to 10 parts by weight per 100 parts by weight of polyvinyl alcohol of a pulverulent, water-soluble polymer or copolymer, the particle size of which is not more than 300 μm and which is composed to the extent of at least 70 % by weight of monomer units which are carboxylic acid amides at least monosubstituted on the amido nitrogen.

2. A composition as claimed in claim 1, wherein the content of component (c) is 1 to 4 parts by weight per 100 parts by weight of polyvinyl alcohol.

3. A composition as claimed in claim 1 and/or 2, wherein component (c) is a polymer or copolymer of N-vinylpyrrolidone, of the sodium salt or ammonium salt of 2-acrylamido-2-methyl-propanesulfonic acid or of N-vinyl-N-methyl-acetamide.

4. A process for the preparation of a polyvinyl alcohol composition as claimed in one or more of claims 1 to 3, which comprises mixing, while dry, a polyvinyl alcohol, soluble in cold water and having an average particle size of at least 70 % by weight between 0.4 and 4.0 mm, with the water-soluble polymer or copolymer (c), then adding the water and the alcohol (b) and, while heating the mixture to 60 to 120°C, preferably 60 to 80°C, mixing it thoroughly and intensively, until the mixture again becomes granular after passing through a gelling phase.

5. The use of a polyvinyl alcohol composition as claimed in one or more of claims 1 to 3 or prepared as claimed in claim 4, for the preparation of films by thermoplastic deformation.

6. A film obtained by thermoplastic deformation and soluble in cold water, made of a plasticizer-containing polyvinyl alcohol composition, as claimed in one or more of claims 1 to 3 or prepared as claimed in claim 4, which comprises 0.5 to 10 parts by weight, preferably 1 to 4 parts by weight, per 100 parts by weight of polyvinyl alcohol of a water-soluble polymer or copolymer which is composed to the extent of at least 70 % by weight of monomer units which are carboxylic acid amides at least monosubstituted on the amido nitrogen.

7. A film as claimed in claim 5 and/or 6, which comprises, per 100 parts by weight of polyvinyl alcohol, 0.5 to 10, preferably 1 to 4, parts by weight of a watersoluble polymer or copolymer which is composed to the extent of at least 70 % by weight of monomer units of N-vinylpyrrolidone, of the sodium or ammonium salt of 2-acrylamido-2-methyl-propanesulfonic acid or of N-vinyl-N-methyl-acetamide.

**Claims** for the Contracting State: AT

1. A process for the preparation of a polyvinyl alcohol composition which can be processed by thermoplastic means into films and mouldings soluble in cold water, wherein the said composition comprises

(a) polyvinyl alcohol soluble in cold water,
(b) water and a polyhydric aliphatic alcohol having a boiling point above 250°C as a plasticizer and
(c) 0.5 to 10 parts by weight per 100 parts by weight of polyvinyl alcohol of a pulverulent, water-soluble polymer or copolymer, the particle size of which is not more than 300 µm and which is composed to the extent of at least 70 % by weight of monomer units which are carboxylic acid amides at least monosubstituted on the amido nitrogen,

and is obtained by mixing, while dry, a polyvinyl alcohol, soluble in cold water and having an average particle size of at least 70 % by weight between 0.4 and 4.0 mm, with the water-soluble polymer or copolymer (c), then adding the water and the alcohol (b) and, while heating the mixture to 60 to 120°C, preferably 60 to 80°C, mixing it thoroughly and intensively, until the mixture again becomes granular after passing through a gelling phase.

2. The process as claimed in claim 1, wherein the content of component (c) is 1 to 4 parts by weight per 100 parts by weight of polyvinyl alcohol.

3. The process as claimed in claim 1 and/or 2, wherein component (c) is a polymer or copolymer of N-vinylpyrrolidone, of the sodium salt or ammonium salt of 2-acrylamido-2-methyl-propanesulfonic acidor of N-vinyl-N-methyl-acetamide.

4. The use of a polyvinyl alcohol composition prepared as claimed in one or more of claims 1 to 3 for the preparation of films by thermoplastic deformation.

5. A process for the preparation of a polyvinyl alcohol film, soluble in cold water, by thermoplastic deformation of a plasticizer-containing polyvinyl alcohol composition, which comprises thermoplastically deforming a polyvinyl alcohol composition prepared as claimed in one or more of claims 1 to 3.

6. The process as claimed in claim 5, wherein the plasticizer-containing polyvinyl alcohol composition contains, per 100 parts by weight of polyvinyl alcohol, 0.5 to 10, preferably 1 to 4, parts by weight of a watersoluble polymer or copolymer which is composed to the extent of at least 70 % by weight of monomer units of N-vinylpyrrolidone, of the sodium or ammonium salt of 2-acrylamido-2-methyl-propanesulfonic acid or of N-vinyl-N-methyl-acetamide.

**Revendications** pour les Etats Contractants: BE, CH, DE, FR, GB, IT, LI, LU, NL, SE

1. Compositions à base de poly-(alcool vinylique) susceptibles d'être transformées, par voie thermoplastique, en feuilles et objets moulés solubles dans l'eau froide, compositions constituées:

(a) d'un poly-(alcool vinylique) soluble dans l'eau froide,
(b) d'eau et d'un polyol aliphatique ayant un point d'ébullition supérieur à 250°C, comme plastifiant, et
(c) de 0,5 à 10 parties en poids, pour 100 parties en poids du poly-(alcool vinylique), d'un polymère ou copolymère pulvérulent hydrosoluble dont la dimension des particules est d'au plus 300 µm, et qui est constitué, pour au moins 70 % en poids, de motifs monomères qui sont des motifs de carboxamides portant au moins un substituant sur l'azote amidique.

2. Compositions selon la revendication 1, caractérisées en ce que la teneur en la composante (c) est comprise entre 1 et 4 parties en poids pour 100 parties en poids du poly-(alcool vinylique).

3. Compositions selon l'une des revendications 1 et 2, caractérisées en ce que la composante (c) est un polymère ou copolymère de la N-vinyl-pyrrolidone, du sel sodique ou ammonique de l'acide acryloylamino-2 méthyl-2 propane-sulfonique ou du N-vinyl-N-méthyl-acétamide.

4. Procédé pour préparer des compositions à base de poly-(alcool vinylique) selon l'une quelconque des revendications 1 à 3, procédé caractérisé en ce qu'on mélange à sec un poly-(alcool vinylique) soluble dans l'eau froide, qui a une distribution granulométrique correspondant en moyenne à une proportion d'au moins 70 % en poids entre 0,4 et 4,0 mm, avec le polymère ou copolymère hydrosoluble (c), puis on ajoute l'eau et l'alcool (b) et, tout en chauffant le mélange à 60 – 120°C, de préférence à 60 – 80°C, on le mélange énergiquement jusqu'à ce qu'il redevienne granuleux après être passé par un état gélifié.

5. Application de compositions à base de poly-(alcool vinylique) selon l'une quelconque des revendications 1 à 3, ou préparées selon la revendication 4, à la fabrication de feuilles par formage à l'état thermoplastique .

6. Feuille soluble dans l'eau froide qui a été fabriquée par formage à l'état thermoplastique à partir de compositions à base de poly-(alcool vinylique) contenant des plastifiants, selon une ou plusieurs des revendications 1 à 3, ou préparées selon la revendication 4, feuille caractérisée en ce qu'elle contient de 0,5 à 10 parties en poids, de préférence de 1 à 4 parties en poids , pour 100 parties en poids de poly-(alcool vinylique), d'un polymère ou copolymère hydrosoluble constitué, pour au moins 70 % en poids, de motifs de monomères qui sont des motifs de carboxamides porteurs d'au moins un substituant sur l'azote amidique.

7. Feuille selon l'une des revendications 5 et 6, caractérisée en ce qu'elle contient, pour 100 parties en poids de poly-(alcool vinylique), de 0,5 à 10 parties en poids, de préférence de 1 à 4, d'un polymère ou copolymère hydrosoluble qui est constitué, pour au moins 70 % en poids, de motifs monomères de N-vinyl-pyrrolidone, d'acryloylamino-2 méthyl-2 propane-sulfonate de sodium ou d'ammonium, ou de N-vinyl-N-méthyl-acétamide.

**Revendications** pour l'Etat Contractant: AT

1. Procédé pour préparer des compositions à base de poly-(alcool vinylique) qui peuvent être transformées, par voie thermoplastique, en feuilles et objets moulés solubles dans l'eau froide, procédé caractérisé en ce que celles-ci sont constituées :

(a) d'un poly-(alcool vinylique) soluble dans l'eau froide,
(b) d'eau et d'un polyol aliphatique ayant un point d'ébullition supérieur à 250°C, comme plastifiant, et
(c) de 0,5 à 10 parties en poids, pour 100 parties en poids du poly-(alcool vinylique), d'un polymère ou copolymère pulvérulent hydrosoluble dont la dimension des particules est d'au plus 300 µm et qui est constitué, pour au moins 70 % en poids, de motifs monomères qui sont des motifs de carboxamides portant au moins un substituant sur l'azote amidique,

et en ce qu'on les a obtenues en mélangeant à sec un poly-(alcool vinylique) soluble dans l'eau froide, qui a une distribution granulométrique correspondant en moyenne à une proportion d'au moins 70 % en poids entre 0,4 et 4,0 mm, avec le polymère ou copolymère hydrosoluble (c), puis en ajoutant l'eau et l'alcool (b) et, en même temps qu'on chauffe le mélange à 60 – 120°C, de préférence à 60 – 80°C, en le mélangeant énergiquement jusqu'à ce qu'il redevienne granuleux après être passé par un état gélifié.

2. Procédé selon la revendication 1 caractérisé en ce que la teneur en la composante (c) est de 1 et 4 parties en poids pour 100 parties en poids du poly-(alcool vinylique).

3. Procédé selon l'une des revendications 1 et 2, caractérisé en ce que la composante (c) est un polymère ou copolymère de la N-vinyl-pyrrolidone, du sel sodique ou ammonique de l'acide acryloylamino-2 méthyl-2 propane-sulfonique ou du N-vinyl-N-méthyl-acétamide.

4. Application de compositions à base de poly-(alcool vinylique) qui ont été préparées selon l'une quelconque des revendications 1 à 3, à la fabrication de feuilles par formage thermoplastique.

5. Procédé pour fabriquer des feuilles en poly-(alcool vinylique) solubles dans l'eau froide, par formage thermoplastique de compositions à base de poly-(alcool vinylique) contenant des plastifiants, procédé caractérisé en ce qu'on moule à l'état thermoplastique des compositions à base de poly-(alcool vinylique) qui ont été préparées selon l'une quelconque des revendications 1 à 3.

6. Procédé selon la revendication 5 caractérisé en ce que la composition à base de poly-(alcool vinylique) renfermant des plastifiants contient, pour 100 parties en poids du poly-(alcool vinylique), de 0,5 à 10 parties en poids, de préférence de 1 à 4, d'un polymère ou copolymère hydrosoluble qui est constitué, pour au moins 70 % en poids, de motifs monomères de N-vinyl-pyrrolidone, d'acryloylamino-2 méthyl-2 propane-sulfonate de sodium ou d'ammonium, ou de N-vinyl-N-méthyl-acétamide.